(19) Europäisches Patentamt
European Patent Office
Office européen des brevets

(11) **EP 2 741 051 B1**

(12) **EUROPÄISCHE PATENTSCHRIFT**

(45) Veröffentlichungstag und Bekanntmachung des Hinweises auf die Patenterteilung:
**08.02.2017 Patentblatt 2017/06**

(51) Int Cl.:
*G01C 21/32* *(2006.01)*  *G01C 21/34* *(2006.01)*

(21) Anmeldenummer: **12195834.2**

(22) Anmeldetag: **06.12.2012**

(54) **Bereitstellen von Zusatzdaten für eine Routenberechnung**

Providing additional data for a route calculation

Préparation de données complémentaires pour un calcul de route

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.06.2014 Patentblatt 2014/24**

(73) Patentinhaber: **Preh Car Connect GmbH 01156 Dresden (DE)**

(72) Erfinder: **Münzner, Dipl.-Math. Christian 01309 Dresden (DE)**

(56) Entgegenhaltungen:
**EP-A2- 0 790 486    EP-A2- 1 850 091
EP-A2- 2 075 537**

EP 2 741 051 B1

**Beschreibung**

Die Erfindung betrifft ein Verfahren und eine Navigationseinrichtung zum Bereitstellen von Zusatzdaten für eine Routenberechnung.

Eine herkömmliche Navigationseinrichtung ist in der Lage, eine Route zu berechnen, die von einer aktuellen Position der Navigationseinrichtung zu einer vorgegebenen Zielposition führt. Die Position der Navigationseinrichtung wird meist unter Verwendung eines Satellitennavigationssystems bestimmt, beispielsweise mittels GPS, GLONASS, COMPASS oder GALILEO. Die Zielposition wird in der Regel aus einem Ziel abgeleitet, das ein Benutzer der Navigationseinrichtung über eine Bedieneinheit in die Navigationseinrichtung eingegeben hat.

Die Routenberechnung wird von einer Recheneinheit der Navigationseinrichtung ausgeführt, welche dazu Landkartendaten verwendet, die in einer Speichereinheit der Navigationseinrichtung abgelegt sind. Die Landkartendaten repräsentieren geografische Objekte und diesen zugeordnete Informationen, beispielsweise Straßen, Wege, Plätze, Eisenbahnlinien, Flüsse, Gebäude, Brücken, Geländeformen, Landesgrenzen, Parkmöglichkeiten, Raststätten, Ortschaften, Verkehrsregelungen und Geschwindigkeitsbegrenzungen. Bei der Speichereinheit handelt es sich beispielsweise um eine CD-ROM, eine Festplatte oder einen Flash-Speicher.

Normalerweise wird die Route derart berechnet, dass die Route die Position der Navigationseinrichtung zu minimalen Wegekosten mit der Zielposition verbindet. Die Wegekosten repräsentieren beispielsweise eine Fahrzeit, eine Streckenlänge, einen Energieverbrauch oder eine Kombination aus den genannten Größen. Die Art der zu berücksichtigenden Wegekosten kann der Benutzer meist durch das Auswählen einer entsprechenden Routenoption (schnellste Route, kürzeste Route, ökologischste Route etc.) im Voraus festlegen.

Aufgrund ihres Umfangs und ihrer Komplexität kann eine Routenberechnung erhebliche Zeit in Anspruch nehmen. Ein Benutzer ist aber meist an einer schnellen Routenberechnung interessiert, bei welcher die Route und die darauf basierende Zielführung bereits kurz nach der Zieleingabe zur Verfügung stehen. Daher empfindet der Benutzer eine während der Routenberechnung auftretende Wartezeit als unangenehm.

Um die Zeitdauer einer Routenberechnung zu verringern, werden manche Landkartendaten vor ihrer Übertragung in eine Navigationseinrichtung zunächst vorverarbeitet. Die Vorverarbeitung wird auch als Routenvorberechnung bezeichnet und findet beispielsweise im Rahmen einer Kartendatenkompilierung statt. Bei der Routenvorberechnung werden spezielle Zusatzdaten erzeugt und gemeinsam mit den Landkartendaten in eine Landkartendatenbank aufgenommen. Nach dem Übertragen der Landkartendatenbank in eine Speichereinheit einer Navigationseinrichtung stehen die Zusatzdaten zusammen mit den Landkartendaten in der Navigationseinrichtung bereit und ermöglichen eine besonders schnelle Routenberechnung, sobald ein Benutzer eine Zieleingabe vorgenommen hat.

Mit dieser Methode lässt sich die für eine Routenberechnung benötigte Zeitdauer allerdings nur unzureichend verringern, sodass immer noch Wartezeiten auftreten, die der Benutzer der Navigationseinrichtung als unangenehm empfindet. Ein weiterer Nachteil der beschriebenen Methode besteht darin, dass die Zusatzdaten permanent Speicherplatz in der Landkartendatenbank belegen, der damit nicht für andere Zwecke nutzbar ist. Ferner kann es vorkommen, dass die geschilderte Methode überhaupt nicht verwendbar ist, da die Landkartendatenbank ein festes Format aufweist, welches kein Hinzufügen von Zusatzdaten erlaubt.

EP1850091 A2 offenbart eine Kartendatenherstellungseinrichtung, welche hierarchische Führungsroutensuch-Kartendaten erzeugt, wobei Informationen über eine Straßenverbindung einer Referenzebene verwendet werden.

Ferner beschreibt EP2075537A2 eine Navigationsvorrichtung zum Beibehalten der Qualität einer Route, die durch eine Routensuche erhalten wird, und gleichzeitigem Reduzieren der Zeit für die Routensuche.

Weiterhin offenbart EP790486A2 eine Routenvorberechnung für eine Vielzahl möglicher Startpunkte einer Route. Somit stellt sich die Aufgabe, die Zeitdauer einer Routenberechnung, welche mittels einer Navigationseinrichtung ausgeführt wird, gegenüber dem Stand der Technik zu reduzieren, ohne dass die Genauigkeit der Routenberechnung beeinträchtigt wird.

Die Aufgabe wird mit dem erfindungsgemäßen Verfahren gemäß Anspruch 1 gelöst.

Somit werden bei dem erfindungsgemäßen Verfahren Zusatzdaten in Form von Start-Übergangsknotenpunkten, Zwischenknotenpunkten und zugeordneten Kostenwerten bereitgestellt. Mit den genannten Zusatzdaten lässt sich die Zeitdauer einer nach einer Zieleingabe ausgeführten Routenberechnung im Vergleich zu einer herkömmlichen Routenberechnung deutlich verringern, ohne die Genauigkeit der Routenberechnung zu beeinträchtigen.

Ferner wird beim Bereitstellen der Zusatzdaten die Position der Navigationseinrichtung berücksichtigt, was ein individuelles Anpassen der Zusatzdaten an die örtliche Situation ermöglicht, in welcher sich ein Fahrzeug befindet. Das geschieht, indem nur solche Zusatzdaten bereitgestellt werden, die bei einer späteren Routenberechnung mit hoher Wahrscheinlichkeit benötigt werden. Das hat den Vorteil, dass die Zusatzdaten mit vergleichsweise geringem Rechenaufwand bestimmbar sind und besonders wenig Speicherplatz benötigen. Dadurch lässt sich eine aufwendige Routenvorberechnung, wie sie bei einer herkömmlichen Kartendatenkompilierung ausgeführt wird, vermeiden. Der Aufwand des erfindungsgemäßen Verfahrens ist demgegenüber deutlich geringer, sodass das Verfahren auf einer mobilen Navigationseinrichtung mit begrenzter Rechenkapazität ausgeführt werden kann, beispielsweise als ein Hintergrundprozess.

Ein weiterer Vorteil des erfindungsgemäßen Verfahrens besteht darin, dass beim Bereitstellen der Zusatzdaten aktuelle Verkehrsinformationen, beispielsweise aus dem TMC-Verkehrsfunk, und individuelle Benutzereinstellungen, beispielsweise zum Meiden bestimmter Straßenabschnitte, berücksichtigt werden können, die bei einer herkömmlichen Routenvorberechnung keine Berücksichtigung fänden.

Die oben genannte Aufgabe wird außerdem mit einer Navigationseinrichtung gemäß dem unabhängigen 15 gelöst.

Weitere Ausführungsformen der Erfindung sind in den abhängigen Patentansprüchen beschrieben.

Die Erfindung wird bezugnehmend auf die folgenden Figuren näher erläutert:

Figur 1 zeigt das Blockschema einer Navigationseinrichtung gemäß einer Ausführungsform der Erfindung.

Die Figuren 2 bis 10 zeigen jeweils einen Ausschnitt eines Straßennetzes zum Erläutern einer Ausführungsform des erfindungsgemäßen Verfahrens.

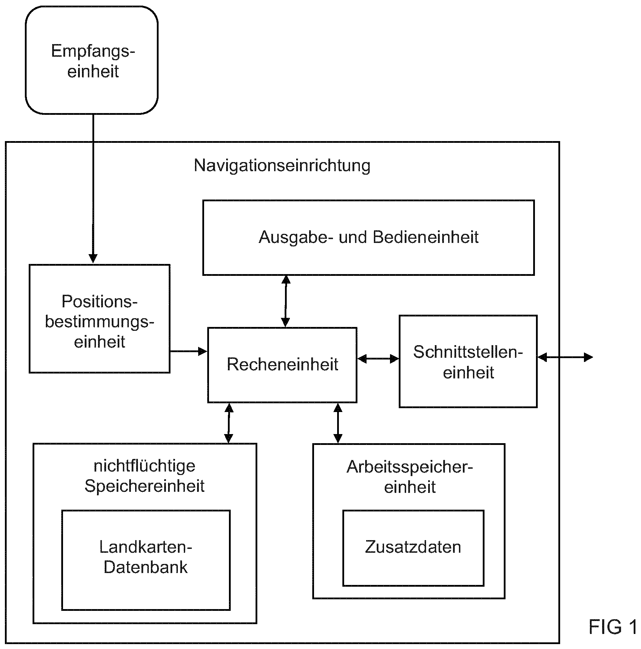

Im Folgenden wird auf **Figur 1** Bezug genommen, welche das Blockschema einer Navigationseinrichtung gemäß einer Ausführungsform der Erfindung zeigt. Die

Straßenklasse angehören, deren Rang höher als der Rang der vorgegebenen Straßenklasse ist, und des Kostenwerts des Start-Übergangsknotenpunkts gebildet wird, eingerichtet ist.

Weitere Ausführungsformen der Erfindung sind in den abhängigen Patentansprüchen beschrieben.

Die Erfindung wird bezugnehmend auf die folgenden Figuren näher erläutert:

Figur 1 zeigt das Blockschema einer Navigationseinrichtung gemäß einer Ausführungsform der Erfindung.

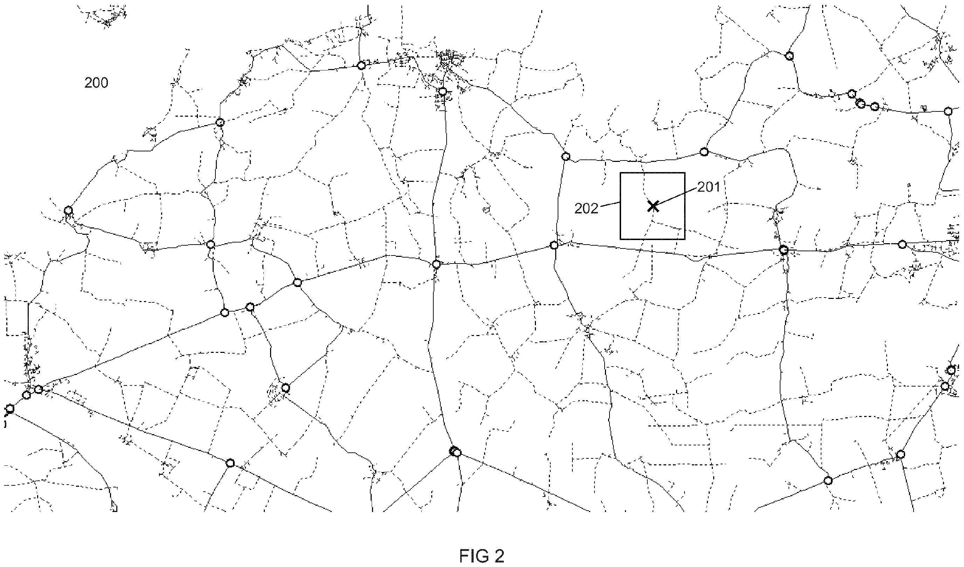

Die Figuren 2 bis 10 zeigen jeweils einen Ausschnitt eines Straßennetzes zum Erläutern einer Ausführungsform des erfindungsgemäßen Verfahrens.

Im Folgenden wird auf Figur 1 Bezug genommen, welche das Blockschema einer Navigationseinrichtung gemäß einer Ausführungsform der Erfindung zeigt. Die

Navigationseinrichtung ist fest in einem Fahrzeug eingebaut, kann aber alternativ dazu auch als separat transportables Gerät ausgebildet sein, das in einem Fahrzeug mitgeführt wird.

Die Navigationseinrichtung weist mehrere Funktionseinheiten auf, die als Rechtecke dargestellt sind. Im Einzelnen gehören eine Positionsbestimmungseinheit, eine Recheneinheit, eine Arbeitsspeichereinheit, eine nichtflüchtige Speichereinheit, eine Schnittstelleneinheit und eine Ausgabe- und Bedieneinheit zu der Navigationseinrichtung. Neben den in Figur 1 gezeigten Funktionseinheiten kann die Navigationseinrichtung noch weitere, nicht gezeigte Funktionseinheiten aufweisen.

Bei der Positionsbestimmungseinheit handelt es sich um einen GPS-Empfänger, der mit einer externen Empfangseinheit in Form einer GPS-Antenne verbunden ist. Die Positionsbestimmungseinheit ist in der Lage, aus von der Empfangseinheit gelieferten Satellitensignalen Positionskoordinaten zu gewinnen, sodass eine geografische Position der Navigationseinrichtung bestimmt wird. Außerdem kann die Positionsbestimmungseinheit die Positionskoordinaten zur Weiterverarbeitung an die angeschlossene Recheneinheit übertragen.

Bei einer anderen Ausführungsform der Erfindung wird anstelle des GPS-Empfängers eine andere Art von Positionsbestimmungseinheit verwendet, beispielsweise ein GALILEO-Empfänger, ein COMPASS-Empfänger oder ein GLONASS-Empfänger, der mit einer passenden Empfangseinheit ausgestattet ist.

Die als Mikrocontroller ausgebildete Recheneinheit ist unter anderem zum Ausführen einer Routenvorberechnung eingerichtet, bei welcher basierend auf einer aktuellen Position der Navigationseinrichtung Übergangsknotenpunkte und Zwischenknotenpunkte sowie zugeordnete Kostenwerte bestimmt werden. Diese Zusatzdaten ermöglichen eine besonders schnelle Routenberechnung, nachdem ein Benutzer ein Ziel in die Navigationseinrichtung eingegeben hat. Bei der Routenvorberechnung werden in der nichtflüchtigen Speichereinheit abgelegte Landkartendaten verwendet.

Ferner ist die Recheneinheit zum Ausführen einer Routenberechnung eingerichtet. Bei der Routenberechnung wird eine Route bereitgestellt, die von einer aktuellen Position der Navigationseinrichtung zu einer Zielposition führt. Die aktuelle Position wird von der Positionsbestimmungseinheit in Form von Positionskoordinaten an die Recheneinheit übertragen. Die Zielposition wird von der Recheneinheit aus einem Ziel abgeleitet, das ein Benutzer der Navigationseinrichtung über die Ausgabe- und Bedieneinheit in die Navigationseinrichtung eingegeben hat. In die Routenberechnung fließen neben den in der nichtflüchtigen Speichereinheit abgelegten Landkartendaten auch die bei der Routenvorberechnung bereitgestellten Zusatzdaten ein.

Bei der mit der Recheneinheit verbundenen nichtflüchtigen Speichereinheit handelt es sich um einen EEPROM, der fest in die Navigationseinrichtung eingebaut ist. Alternativ dazu kann die nichtflüchtige Speichereinheit oder ein Teil der nichtflüchtigen Speichereinheit auch als austauschbares Speichermedium ausgebildet sein, beispielsweise als Speicherkarte. Der hier verwendete EEPROM beherbergt unter anderem eine Landkartendatenbank, welche die Landkartendaten enthält. Die Landkartendaten sind einem bestimmten Gebiet zugeordnet und repräsentieren unter anderem Straßen und auf den Straßen angeordnete Knotenpunkte.

Die ebenfalls mit der Recheneinheit verbundene Arbeitsspeichereinheit dient zum temporären Speichern von Variablen und Zwischenergebnissen, die von der Recheneinheit erzeugt werden. Daneben dient die Arbeitsspeichereinheit zum Speichern von Zusatzdaten, sodass diese für eine Routenberechnung bereitstehen. Alternativ dazu können die Zusatzdaten auch in der nichtflüchtigen Speichereinheit abgelegt sein.

Außerdem ist die Recheneinheit mit einer Schnittstelleneinheit verbunden, die unter anderem zum Übertragen von Landkartendaten in die nichtflüchtige Speichereinheit dient, sodass die in der nichtflüchtigen Speichereinheit abgelegten Landkartendaten aktualisiert werden. Alternativ dazu, wenn die nichtflüchtige Speichereinheit als austauschbares Speichermedium ausgeführt ist, können die in der Navigationseinrichtung befindlichen Landkartendaten auch durch einen Austausch des Speichermediums aktualisiert werden.

Die mit der Recheneinheit verbundene Ausgabe- und Bedieneinheit weist einen Berührungsbildschirm, mehrere Drucktasten und eine Sprachausgabeeinrichtung auf. Die Ausgabe- und Bedieneinheit dient unter anderem zum Ausgeben von Umgebungsinformationen, Routeninformationen und Fahranweisungen an einen Benutzer der Navigationseinrichtung. Ferner erlaubt die Ausgabe- und Bedieneinheit das Eingeben von Bedienbefehlen und Zielen in die Navigationseinrichtung.

Im Folgenden wird eine beispielhafte Ausführungsform des erfindungsgemäßen Verfahrens erläutert, welche mittels der Navigationseinrichtung aus Figur 1 ausgeführt wird.

**Figur 2** zeigt einen Ausschnitt 200 aus einem Straßennetz, welches eine Vielzahl von Fernstraßen und Nebenstraßen aufweist. Die Fernstraßen des Ausschnitts 200 sind als durchgängige Linien dargestellt, während die Nebenstraßen des Ausschnitts 200 als unterbrochene Linien dargestellt sind.

Außerdem zeigt Figur 2 mehrere Knotenpunkte, die in Form kleiner weißer Kreise dargestellt sind. Die Knotenpunkte sind auf Straßen einer vorgegebenen Art angeordnet, welche Straßen einer vorgegebenen Straßenklasse und Straßen höherrangiger Straßenklassen umfasst. Im vorliegenden Fall weist die vorgegebene Straßenklasse Fernstraßen auf, sodass die vorgegebene Art Fernstraßen und Autobahnen umfasst. Die Knotenpunkte sind ferner derart angeordnet, dass an jedem der Knotenpunkte mehrere Straßen der vorgegebenen Art zusammentreffen.

Weiterhin zeigt Figur 2 eine Ausgangsposition 201 in Form eines Kreuzes, welche die aktuelle Position der Navigationseinrichtung repräsentiert.

Bei einem ersten Verfahrensschritt werden mittels der Positionsbestimmungseinheit der Navigationseinrichtung die Positionskoordinaten der Ausgangsposition 201 bestimmt und an die Recheneinheit übertragen.

Bei einem zweiten Verfahrensschritt wird ein Ausgangsbereich 202 festgelegt, in welchem die Ausgangsposition 201 angeordnet ist. Der Ausgangsbereich 202 hat im vorliegenden Fall die Form eines Quadrats. Ein solcher Ausgangsbereich kann jedoch auch eine andere Form aufweisen, beispielsweise eine Kreisform, eine Rechteckform oder eine Ellipsenform.

Der Ausgangsbereich 202 ist derart angeordnet, dass sich die Ausgangsposition 201 in der Mitte des Ausgangsbereichs 202 befindet. Ein solcher Ausgangsbereich kann aber auch anders angeordnet sein, beispielsweise so, dass eine Mitte des Ausgangsbereichs bezüglich der Position einer Navigationseinrichtung in der Bewegungsrichtung der Navigationseinrichtung angeordnet ist.

Die Größe des Ausgangsbereichs 202 ist derart gewählt, dass die Navigationseinrichtung den Ausgangsbereich 202 nicht verlassen kann, bevor das erfindungsgemäße Verfahren vollständig durchlaufen wurde. Optional kann die Größe des Ausgangsbereichs 202 in Abhängigkeit von der Geschwindigkeit festgelegt werden, mit weicher sich die Navigationseinrichtung bewegt beziehungsweise bisher bewegt hat. Je größer die Geschwindigkeit ist, umso größer wird der Ausgangsbereich 202 ausgebildet.

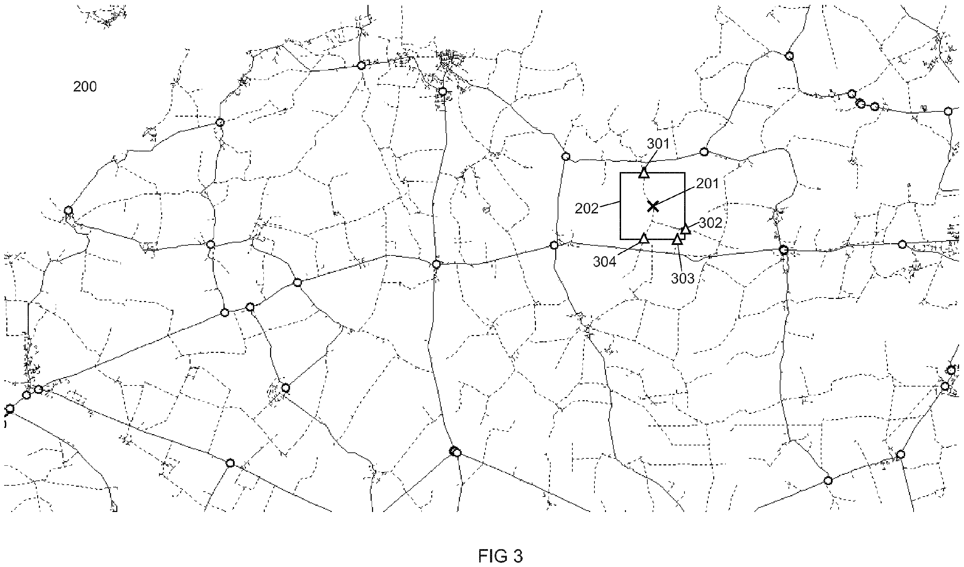

Es wird nun auf **Figur 3** Bezug genommen, welche den bereits in Figur 2 abgebildeten Ausschnitt 200 des Straßennetzes zeigt.

Bei einem dritten Verfahrensschritt werden mittels der Recheneinheit unter Verwendung der in der nichtflüchtigen Speichereinheit abgelegten Landkartendaten alle Austrittspunkte 301 bis 304 ermittelt, an denen jeweils eine Straße den Ausgangsbereich 202 verlässt. Jeder der Austrittspunkte 301 bis 304 ist in Figur 3 als kleines weißes Dreieck dargestellt.

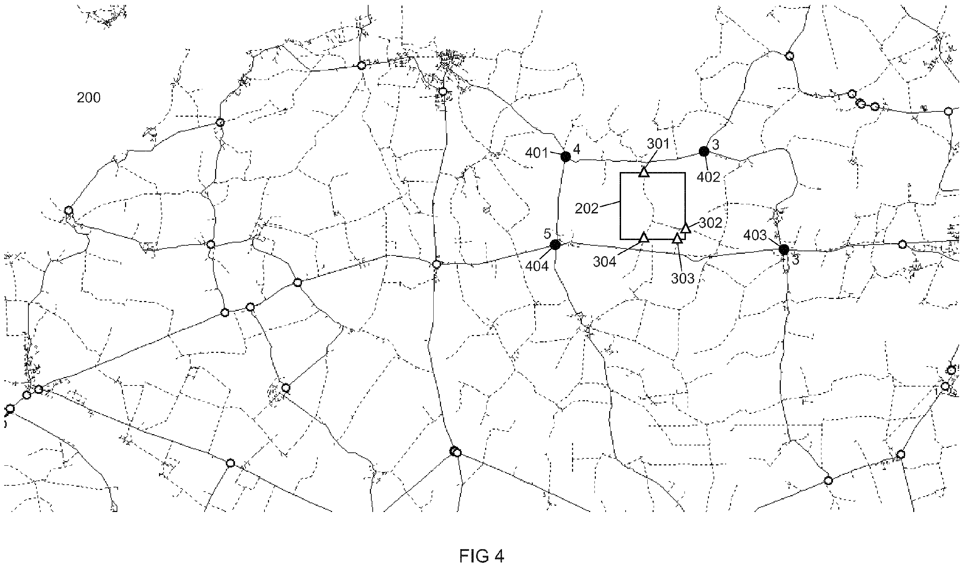

Im Folgenden wird auf **Figur 4** Bezug genommen, welche den bereits in den Figuren 2 und 3 abgebildeten Ausschnitt 200 des Straßennetzes zeigt.

Bei einem vierten Verfahrensschritt wird mittels der Recheneinheit unter Verwendung der Landkartendaten für jeden der Austrittspunkte 301 bis 304 ein Start-Übergangsknotenpunkt 401 bis 404 ausgewählt. Die Start-Übergangsknotenpunkte 401 bis 404 sind in Figur 4 als kleine schwarze Kreise dargestellt. Außerdem wird jedem der Start-Übergangsknotenpunkte 401 bis 404 ein Kostenwert zugeordnet, der in Figur 4 als einstellige Ziffer neben dem jeweiligen Start-Übergangsknotenpunkt 401 bis 404 abgebildet ist. Der Kostenwert repräsentiert die minimalen Wegekosten, zu denen der Start-Übergangsknotenpunkt 401 bis 404 vom Ausgangsbereich 202 aus erreichbar ist.

Im Einzelnen wird bei einem ersten Teilschritt für jeden der Austrittspunkte 301 bis 304 unter Verwendung des Dijkstra-Algorithmus diejenige Strecke bestimmt, welche den jeweiligen Austrittspunkt 301 bis 304 zu minimalen Wegekosten mit irgendeinem der außerhalb des Ausgangsbereichs 202 angeordneten Knotenpunkte verbindet. Der auf diese Weise ausgewählte Knotenpunkt wird dem Austrittspunkt 301 bis 304 als Start-Übergangsknotenpunkt 401 bis 404 zugeordnet. Auf diese Weise wird dem Austrittspunkt 301 der Start-Übergangsknotenpunkt 401, dem Austrittspunkt 302 der Start-Übergangsknotenpunkt 402, dem Austrittspunkt 303 der Start-Übergangsknotenpunkt 403 und dem Austrittspunkt 304 der Start-Übergangsknotenpunkt 404 zugeordnet.

Bei einem zweiten Teilschritt werden jedem der Start-Übergangsknotenpunkte 401 bis 404 die Wegekosten derjenigen Strecke, welche den jeweiligen Start-Übergangsknotenpunkt 401 bis 404 zu minimalen Wegekosten mit einem der Austrittspunkte 301 bis 304 verbindet, als Kostenwert zugeordnet. Auf diese Weise wird dem Start-Übergangsknotenpunkt 401 der Kostenwert 4, den Start-Übergangsknotenpunkten 402 und 403 der Kostenwert 3 und dem Start-Übergangsknotenpunkt 404 der Kostenwert 5 zugeordnet.

Zu bemerken ist, dass im vorliegenden Fall jedem der Austrittspunkte 301 bis 304 ein anderer Start-Übergangsknotenpunkt 401 bis 404 zugeordnet wurde. Das führt dazu, dass jedem der Start-Übergangsknotenpunkte 401 bis 404 die Wegekosten derjenigen Strecke als Kostenwert zugeordnet werden, auf deren Basis der Start-Übergangsknotenpunkt 401 bis 404 ausgewählt wurde.

Dagegen kann es bei einer anderen Ausführungsform der Erfindung vorkommen, dass mehreren Austrittpunkten derselbe Start-Übergangsknotenpunkt zugeordnet wurde. Damit basiert die Auswahl des Start-Übergangsknotenpunkts auf unterschiedlichen Strecken mit unterschiedlichen Wegekosten, unter denen eine Auswahl für den Kostenwert getroffen werden muss. Erfindungsgemäß geschieht das dadurch, dass dem Start-Übergangsknotenpunkt die minimalen Wegekosten zugeordnet werden, zu denen der Start-Übergangsknotenpunkt mit irgendeinem der Austrittspunkte verbunden ist.

Die im vorliegenden Fall ausgewählten Start-Übergangsknotenpunkte 401 bis 404 und die zugeordneten Kostenwerte werden mittels der Recheneinheit in der Arbeitsspeichereinheit der Navigationseinrichtung gespeichert, wobei jeder der Start-Übergangsknotenpunkte 401 bis 404 mit dem ihm zugeordneten Kostenwert verknüpft wird. Damit stehen die gespeicherten Zusatzdaten für eine spätere Routenberechnung bereit, welche dann gestartet wird, wenn ein Benutzer ein Ziel in die Navigationseinrichtung eingegeben hat.

Bei einer anderen Ausführungsform der Erfindung werden die Start-Übergangsknotenpunkte und die ihnen zugeordneten Kostenwerte in entsprechender Weise in der nichtflüchtigen Speichereinheit einer Navigationseinrichtung gespeichert.

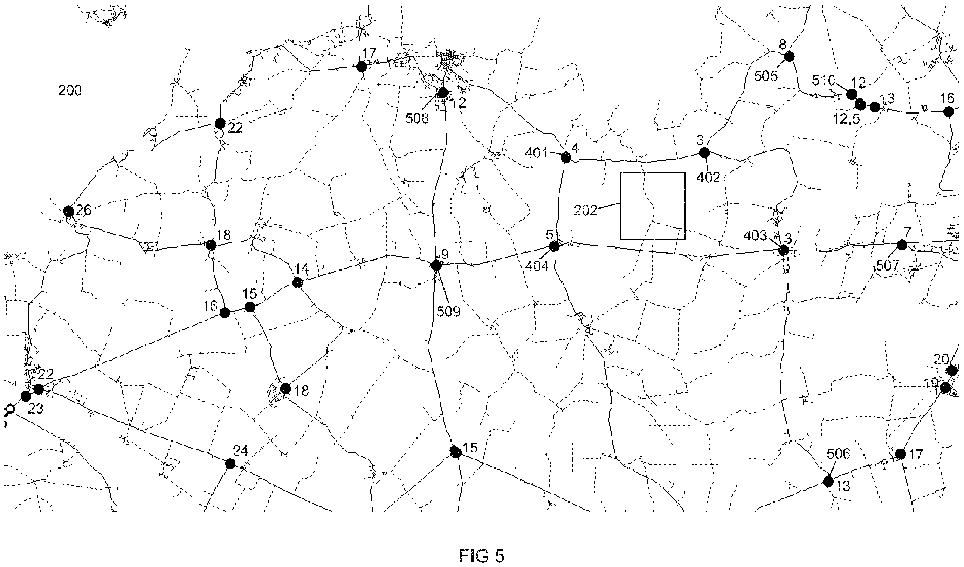

Im Folgenden wird auf **Figur 5** Bezug genommen, welche den bereits in den Figuren 2 bis 4 abgebildeten Ausschnitt 200 des Straßennetzes zeigt.

Bei einem fünften Verfahrensschritt werden mittels der Recheneinheit unter Verwendung der Landkartendaten mehrere Zwischenknotenpunkte ausgewählt, die in Figur 5 als kleine schwarze Kreise dargestellt sind (Daneben zeigt Figur 5 auch die im vierten Verfahrensschritt ausgewählten Start-Übergangsknotenpunkte 401 bis 404 in Form kleiner schwarzer Kreise.). Außerdem wird jedem der Zwischenknotenpunkte ein Kostenwert zugeordnet, der in Figur 5 als Ziffer neben dem jeweiligen Zwischenknotenpunkt abgebildet ist. Der Kostenwert repräsentiert die minimalen Wegekosten, zu denen der Zwischenknotenpunkt vom Ausgangsbereich 202 aus erreichbar ist.

Im Einzelnen werden bei einem ersten Teilschritt aus den Knotenpunkten des Straßennetzes, welche die folgenden Bedingungen erfüllen, mehrere Zwischenknotenpunkte ausgewählt:

a) Die Knotenpunkte sind außerhalb des Ausgangsbereichs 202 angeordnet.
b) Die Knotenpunkte wurden nicht als Start-Übergangsknotenpunkte 401 bis 404 ausgewählt.
c) Die Knotenpunkte erfüllen ein vorgegebenes Auswahlkriterium.

Durch das Auswahlkriterium werden das Verfahren und der damit verbundene Rechenaufwand auf einen relevanten Teilbereich des Straßennetzes beschränkt. Im vorliegenden Fall wird das Auswahlkriterium dann von einem Knotenpunkt erfüllt, wenn der Knotenpunkt von dem Ausgangsbereich 202 aus zu Wegekosten erreichbar ist, die einen vorgegebenen Kostenwert von 25 nicht überschreiten. Die Wegekosten repräsentieren beispielsweise eine Fahrzeit, eine Weglänge, einen Energieverbrauch oder eine Kombination aus den genannten Größen.

Bei einer anderen Ausführungsform der Erfindung erfüllt ein Knotenpunkt ein Auswahlkriterium dann, wenn der Knotenpunkt von einem Ausgangsbereich aus in einer vorgegebenen Fahrzeit, welche beispielsweise 10 Stunden beträgt, erreichbar ist.

Bei einer weiteren Ausführungsform der Erfindung erfüllt ein Knotenpunkt ein Auswahlkriterium dann, wenn der Knotenpunkt in einer Entfernung von einem Ausgangsbereich angeordnet ist, die gleich einer vorgegebenen Entfernung oder kleiner als die vorgegebene Entfernung ist.

Bei einem zweiten Teilschritt wird jedem der Zwischenknotenpunkte ein Kostenwert zugeordnet, der als Summe der minimalen Wegekosten, zu denen der Zwischenknotenpunkt von einem der Start-Übergangsknotenpunkte 401 bis 404 aus ausschließlich über Straßen der vorgegebenen Art erreichbar ist, und des Kostenwerts des jeweiligen Start-Übergangsknotenpunkts 401 bis 404 gebildet wird. Damit repräsentiert der dem Zwischenknotenpunkt zugeordnete Kostenwert die minimalen Wegekosten, zu denen der Zwischenknotenpunkt vom Ausgangsbereich 202 aus erreichbar ist.

Bei der vorliegenden Ausführungsform der Erfindung wird zum Ausführen des fünften Verfahrensschritts der Dijkstra-Algorithmus verwendet, welcher mit den Start-Übergangsknotenpunkten 401 bis 404 gestartet wird. Der detaillierte Ablauf des fünften Verfahrensschritts ist in Anlage A bezugnehmend auf die Zwischenknotenpunkte 505 bis 510 beispielhaft beschrieben.

Die bei dem fünften Verfahrensschritt ausgewählten Zwischenknotenpunkte und die ihnen zugeordneten Kostenwerte werden mittels der Recheneinheit in der Arbeitsspeichereinheit der Navigationseinrichtung gespeichert, wobei jeder der Zwischenknotenpunkte mit dem ihm zugeordneten Kostenwert verknüpft wird. Damit stehen die gespeicherten Zusatzdaten für eine spätere Routenberechnung bereit, welche dann gestartet wird, wenn ein Benutzer ein Ziel in die Navigationseinrichtung eingegeben hat.

Bei einer anderen Ausführungsform der Erfindung werden die Zwischenknotenpunkte und die ihnen zugeordneten Kostenwerte in entsprechender Weise in der nichtflüchtigen Speichereinheit einer Navigationseinrichtung gespeichert.

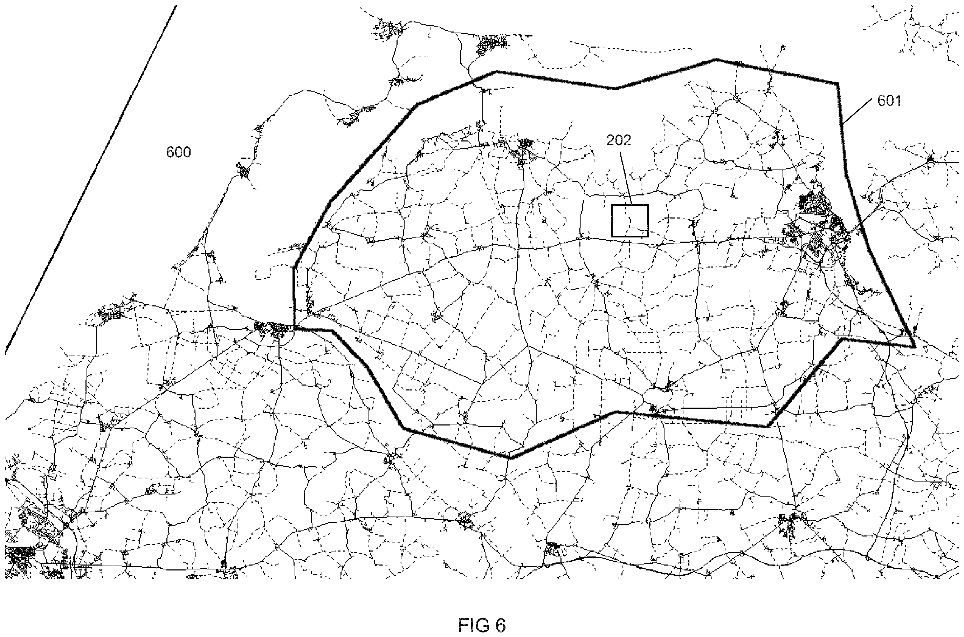

**Figur 6** zeigt einen gegenüber den Figuren 2 bis 5 größeren Ausschnitt 600 des Straßennetzes zur Verdeutlichung des mit den Verfahrensschritten eins bis fünf erreichten Ergebnisses. Die in Figur 6 abgebildete breite schwarze Linie umgibt denjenigen Bereich 601 des Straßennetzes, dessen Knotenpunkte als Start-Übergangsknotenpunkte 401 bis 404 oder Zwischenknotenpunkte ausgewählt wurden. Wie oben erläutert, ist jedem der Start-Übergangsknotenpunkte 401 bis 404 und Zwischenknotenpunkte ein Kostenwert zugeordnet, welcher die minimalen Wegekosten repräsentiert, zu denen der Knotenpunkt vom Ausgangsbereich 202 aus erreichbar ist. Damit stehen Zusatzdaten bereit, welche eine besonders schnelle Routenberechnung nach einer Zieleingabe ermöglichen.

Bei einer anderen Ausführungsform der Erfindung, bei welcher mehrere Routenoptionen (schnellste Route, kürzeste Route, ökologischste Route etc.) von einem Benutzer auswählbar sind, werden die Verfahrensschritte eins bis fünf für jede der Routenoptionen ausgeführt, sodass die oben genannten Zusatzdaten für jede der Routenoptionen separat bereitgestellt werden. Das hat den Vorteil, dass eine schnelle Routenberechnung auf Basis der Zusatzdaten auch dann durchführbar ist, wenn bei einer Zieleingabe die ursprüngliche eingestellte Routenoption geändert wird.

Ferner werden im vorliegenden Fall die Verfahrensschritte eins bis fünf dann erneut ausgeführt, wenn sich die Navigationseinrichtung beziehungsweise das Fahrzeug der Grenze eines Ausgangsbereichs bis auf eine vorgegebene Entfernung genähert hat, ohne dass eine Zieleingabe erfolgt ist. Dabei wird die neue Position der Navigationseinrichtung beziehungsweise des Fahrzeugs als Ausgangsposition verwendet. Auf diese Weise können die Verfahrensschritte eins bis fünf während einer Fahrt mehrere Male ausgeführt werden.

Bei einer anderen Ausführungsform der Erfindung wird das Verfahren nach dem Zurücklegen einer vorgegebenen Streckenlänge seit dem Verfahrensstart, oder wenn das Fahrzeug seit dem Verfahrensstart eine vorgegebene Zeitdauer gefahren ist, erneut ausgeführt.

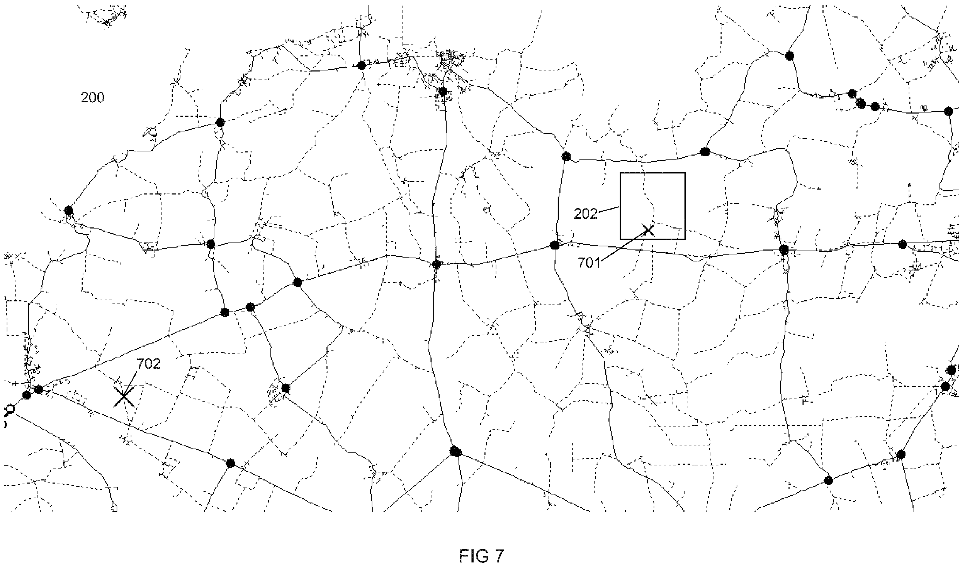

Im Folgenden wird beispielhaft erläutert, wie unter Verwendung der Start-Übergangsknotenpunkte 401 bis 404, der Zwischenknotenpunkte und der zugeordneten Kostenwerte, die bei den Verfahrensschritten eins bis fünf bereitgestellt wurden, eine Route berechnet wird. Dazu wird zunächst auf **Figur 7** Bezug genommen, welche den bereits in den Figuren 2 bis 5 abgebildeten Ausschnitt 200 des Straßennetzes zeigt, dessen Knotenpunkte hier als kleine schwarze Kreise dargestellt sind.

In Figur 7 ist außerdem der Ausgangsbereich 202 abgebildet, in dem eine als Kreuz dargestellte Startposition 701 angeordnet ist, welche die Navigationseinrichtung nach dem Verlassen der Ausgangsposition 201 erreicht hat. Bei der Startposition 701 handelt es sich um die aktuelle Position der Navigationseinrichtung zum betrachteten Zeitpunkt.

Zu diesem Zeitpunkt sind die Verfahrensschritte eins bis fünf beendet worden, sodass die oben genannten Zusatzdaten bereitstehen. Ferner hat ein Benutzer ein Ziel in die Navigationseinrichtung eingegeben, welches von der ebenfalls als Kreuz dargestellten Zielposition 702 repräsentiert wird, welche sich außerhalb des Ausgangsbereichs 202 befindet. Demzufolge wird eine Route gesucht, welche die Startposition 701 zu minimalen Wegekosten mit der Zielposition 702 verbindet.

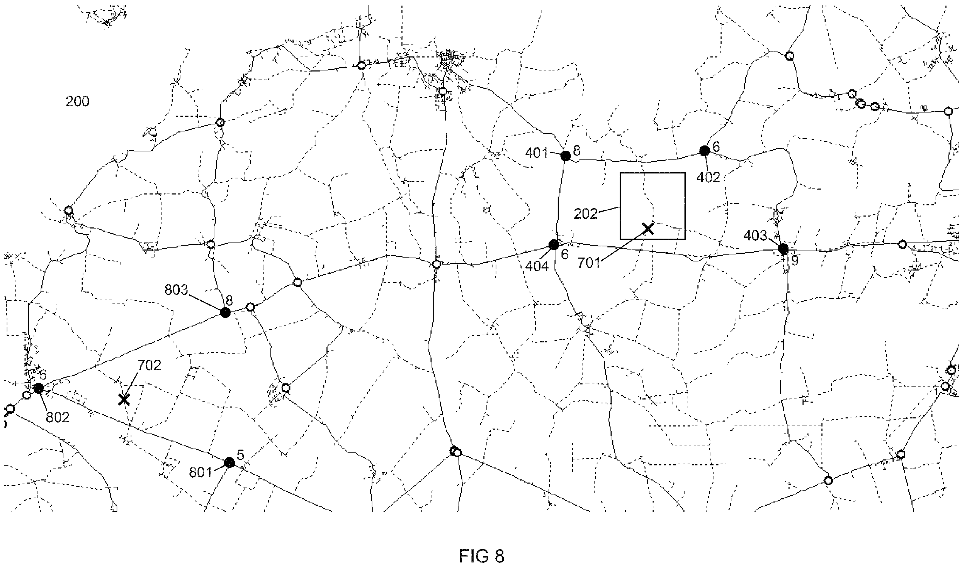

Es wird nun auf **Figur 8** Bezug genommen, welche den bereits in Figur 7 abgebildeten Ausschnitt 200 des Straßennetzes zeigt. In Figur 8 sind die Start-Übergangsknotenpunkte 401 bis 404 als kleine schwarze Kreise dargestellt, während einige der Zwischenknotenpunkte als kleine weiße Kreise und andere der Zwischenknotenpunkte als kleine schwarze Kreise dargestellt sind.

Bei einem weiteren Verfahrensschritt werden mittels der Positionsbestimmungseinheit der Navigationseinrichtung die Positionskoordinaten der Startposition 701 bestimmt und an die Recheneinheit der Navigationseinrichtung übertragen.

Ferner wird bei einem weiteren Verfahrensschritt mittels der Recheneinheit unter Verwendung der Landkartendaten jedem der Start-Übergangsknotenpunkte 401 bis 404 ein Kostenzweitwert zugeordnet, welcher den minimalen Wegekosten entspricht, zu denen der Start-Übergangsknotenpunkt 401 bis 404 von der Startposition 701 aus erreichbar ist. Dazu wird für jeden der Start-Übergangsknotenpunkte 401 bis 404 unter Verwendung des Dijkstra-Algorithmus diejenige Strecke bestimmt, welche den jeweiligen Start-Übergangsknotenpunkt 401 bis 404 zu minimalen Wegekosten mit der Startposition 701 verbindet. Die auf diese Weise ermittelten minimalen Wegekosten werden dem Start-Übergangsknotenpunkt 401 bis 404 als Kostenzweitwert zugeordnet. Im vorliegenden Fall wird dem Start-Übergangsknotenpunkt 401 der Kostenzweitwert 8, dem Start-Übergangsknotenpunkt 402 der Kostenzweitwert 6, dem Start-Übergangsknotenpunkt 403 der Kostenzweitwert 9 und dem Start-Übergangsknotenpunkt 404 der Kostenzweitwert 6 zugeordnet, wie die neben den Start-Übergangsknotenpunkten 401 bis 404 abgebildeten einstelligen Ziffern verdeutlichen.

Bei einem weiteren Verfahrensschritt werden mehrere Zwischenknotenpunkte, die sich in der Nähe der Zielposition befinden, als Ziel-Übergangsknotenpunkte 801 bis 803 ausgewählt, wobei jedem der Ziel-Übergangsknotenpunkte 801 bis 803 ein Kostenzweitwert zugeordnet wird.

In Figur 8 wird jeder der Ziel-Übergangsknotenpunkte 801 bis 803 von einem kleinen schwarzen Kreis symbolisiert. Die Anzahl der auszuwählenden Ziel-Übergangsknotenpunkte ist im vorliegenden Fall fest vorgegeben und beträgt drei. Es ist jedoch auch möglich, eine andere Anzahl auszuwählender Ziel-Übergangsknotenpunkte vorzugeben, beispielsweise zwei, vier oder fünf, oder die Anzahl der auszuwählenden Ziel-Übergangsknotenpunkte zu variieren.

Im Einzelnen wird zunächst unter Verwendung des Dijkstra-Algorithmus diejenige Strecke bestimmt, welche die Zielposition 702 zu minimalen Wegekosten mit irgendeinem der Zwischenknotenpunkte verbindet. Der auf diese Weise ermittelte Zwischenknotenpunkt wird als erster Ziel-Übergangsknotenpunkt 801 ausgewählt. Außerdem werden die minimalen Wegekosten dem Ziel-Übergangsknotenpunkt 801 als Kostenzweitwert zugeordnet. Der Kostenzweitwert beträgt im vorliegenden Fall 5, wie die neben dem Ziel-Übergangsknotenpunkt 801 abgebildete Ziffer zeigt.

Dann wird unter Verwendung des Dijkstra-Algorithmus diejenige Strecke bestimmt, welche die Zielposition 702 zu minimalen Wegekosten mit einem der Zwischenknotenpunkte verbindet, der noch nicht als Ziel-Übergangsknotenpunkt ausgewählt wurde. Der auf diese Weise ermittelte Zwischenknotenpunkt wird als zweiter Ziel-Übergangsknotenpunkt 802 ausgewählt. Außerdem werden die minimalen Wegekosten dem Ziel-Übergangsknotenpunkt 802 als Kostenzweitwert zugeordnet. Der Kostenzweitwert beträgt im vorliegenden Fall 6, wie die neben dem Ziel-Übergangsknotenpunkt 802 abgebildete Ziffer zeigt.

Danach wird unter Verwendung des Dijkstra-Algorithmus diejenige Strecke bestimmt, welche die Zielposition 702 zu minimalen Wegekosten mit einem der Zwischenknotenpunkte verbindet, der noch nicht als Ziel-Übergangsknotenpunkt ausgewählt wurde. Der auf diese Weise ermittelte Zwischenknotenpunkt wird als dritter Ziel-Übergangsknotenpunkt 803 ausgewählt. Außerdem werden die minimalen Wegekosten dem Ziel-Übergangsknotenpunkt 803 als Kostenzweitwert zugeordnet. Der Kostenzweitwert beträgt im vorliegenden Fall 8, wie die neben dem Ziel-Übergangsknotenpunkt 803 abgebildete Ziffer zeigt.

Bei einem weiteren Verfahrensschritt wird auf der Basis der Start-Übergangsknotenpunkte 401 bis 404, der Zwischenknotenpunkte, der Ziel-Übergangsknotenpunkte 801 bis 803 und der zugeordneten Kostenwerte und Kostenzweitwerte die gesuchte Route berechnet.

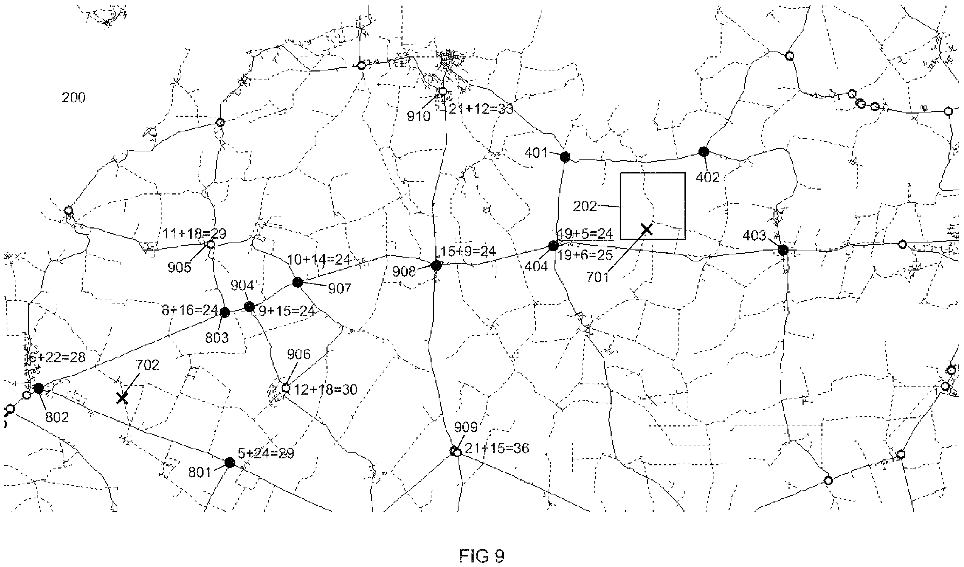

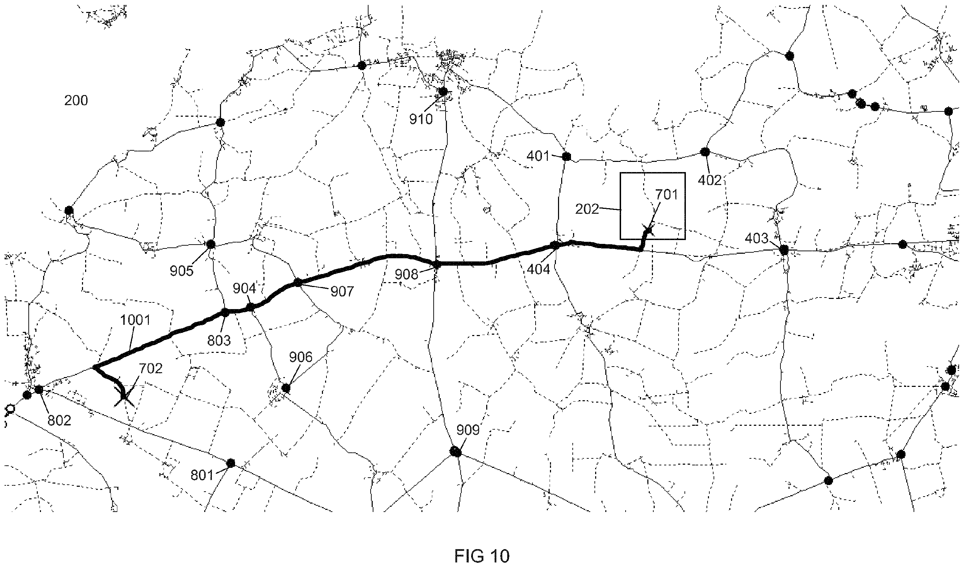

Dazu wird im vorliegenden Fall der A*-Algorithmus verwendet, welcher mit den Ziel-Übergangsknotenpunkten 801 bis 803 gestartet wird und die bei den Verfahrensschritten eins bis fünf bestimmten Kostenwerte der Start-Übergangsknotenpunkte 401 bis 404 und der Zwischenknotenpunkte als Heuristik verwendet. Dadurch wird die Standardheuristik einer herkömmlichen Routenberechnung durch eine deutlich bessere Heuristik ersetzt. Der detaillierte Ablauf des A*-Algorithmus ist in Anlage B bezugnehmend auf die **Figuren 9 und 10** beispielhaft beschrieben.

Im Ergebnis wird eine Route 1001 bereitgestellt, die in Figur 10 als breite schwarze Linie dargestellt ist. Die Route 1001 verbindet die Startposition 701 zu minimalen Wegekosten mit der Zielposition 702 und verläuft über die Knotenpunkte 404, 908, 907, 904 und 803. Zwischen dem Start-Übergangsknotenpunkt 404 und dem Ziel-Übergangsknotenpunkt 803 verläuft die Route 1001 ausschließlich über Straßen der vorgegebenen Art. Die Wegekosten der Route 1001 betragen 25.

**Anlage A**

**Auswählen der Zwischenknotenpunkte und Bestimmen zugeordneter Kostenwerte mittels Dijkstra-Algorithmus (fünfter Verfahrensschritt)**

(vgl. Figur 5)

Füge die Start-Übergangsknotenpunkte 401 bis 404 inklusive der zugeordneten Kostenwerte in eine Liste L1 ein, wobei die Start-Übergangsknotenpunkte 401 bis 404 nach ihren Kostenwerten sortiert werden:

$$L1 = \{ 402(3), 403(3), 401(4), 404(5) \}$$

BEGINN SCHLEIFE

a) Entnimm einen Knotenpunkt 402(3) mit dem niedrigsten Kostenwert aus der Liste L1.

b) Speichere den entnommenen Knotenpunkt 402(3) mit seinem Kostenwert in einer Heuristikliste H: H = { 402(3) }

c) Wenn der Kostenwert des entnommenen Knotenpunkts 402(3) größer als ein vorgegebener Kostenwert von 25 ist, beende die Schleife (Abbruchkriterium). Ansonsten gehe weiter zu d).

d) Beschaffe diejenigen Knotenpunkte 401, 403, 505 aus der Landkartendatenbank, die mit dem entnommenen Knotenpunkt 402(3) direkt verbunden sind (Nachbarknotenpunkte).

e) Bestimme für jeden der Nachbarknotenpunkte 401, 403, 505 aus den Landkartendaten die minimalen Wegekosten zwischen dem entnommenen Knotenpunkt 402(3) und dem Nachbarknotenpunkt 401, 403, 505:

$$\text{Wegekosten (402 nach 401)} = 7$$

$$\text{Wegekosten (402 nach 403)} = 8$$

$$\text{Wegekosten (402 nach 505)} = 5$$

Addiere zu den Wegekosten jeweils den Kostenwert des entnommenen Knotenpunkts 402, sodass für jeden der Nachbarknotenpunkte 401, 403, 505 eine Summe gebildet wird:

$$\text{Summe (401)} = 7 + 3 = 10$$

$$\text{Summe (403)} = 8 + 3 = 11$$

$$\text{Summe (505)} = 5 + 3 = 8$$

Sortiere diejenigen der Nachbarknotenpunkte 401, 403, 505 in die Liste L1 ein, die in keiner von der Liste L1 und der Heuristikliste H vorhanden sind oder eine Summe aufweisen, welche kleiner als der entsprechende Kostenwert der Liste L1 ist. Ordne jedem der einsortierten Nachbarknotenpunkte 505 die zugehörige Summe als Kostenwert zu:

$$L1 = \{\ 403(3),\ 401(4),\ 404(5),\ \mathbf{505(8)}\ \}$$

f) Gehe zum Beginn der Schleife.

ENDE SCHLEIFE

Daten des 2. Schleifendurchlaufs:

   a) 403(3)
   b) H = {402(3), 403(3)}
   c) Weiter
   d) 402,404,506,507
   e) L1 = {401 (4), 404(5), **507(7)**, 505(8), **506(13)** }

Daten des 3. Schleifendurchlaufs:

   a) 401(4)
   b) H ={401 (4), 402(3), 403(3)}
   c) Weiter
   d) 402,404,508
   e) L1 = {404(5), 507(7), 505(8), **508(12),** 506(13) }

Daten des 4. Schleifendurchlaufs:

   a) 404(5)
   b) H = {404(5), 401 (4), 402(3),403(3)}
   c) Weiter
   d) 401,403,509
   e) L1 = {507(7), 505(8), **509(9)**, 508(12), 506(13) }

Daten des 5. Schleifendurchlaufs:

   a) 507(7)
   b) H = {507(7), 404(5), 401 (4), 402(3), 403(3) }
   c) Weiter
   d) 403
   e) L1 = {505(8), 509(9), 508(12), 506(13)}

Daten des 6. Schleifendurchlaufs:

   a) 505(8)
   b) H = {505(8), 507(7), 404(5), 401 (4), 402(3), 403(3)}
   c) Weiter
   d) 402,510
   f) L1 = {509(9), 508(12), **510(12),** 506(13)}

Es folgen weitere derartige Schleifendurchläufe, bis das Abbruchkriterium gemäß c) erfüllt ist.

**Anlage B**

**Berechnen der Route von der Startposition 701 zu der Zielposition 702 mittels A\*-Algorithmus**

(vgl. Figuren 9 und 10)

Addiere zu den Kostenzweitwerten der Ziel-Übergangsknotenpunkte 801 bis 803 jeweils den Kostenwert, der dem jeweiligen Zwischenknotenpunkt in der Heuristikliste H zugeordnet ist, und ordne die resultierende Summe dem Ziel-Übergangsknotenpunkt 801 bis 803 als Gesamtkostenwert zu. Der Gesamtkostenwert repräsentiert die minimalen Wegekosten einer Route, die vom Ausgangsbereich 202 über den Ziel-Übergangsknotenpunkt zu der Zielposition 702 führt:

$$\text{Gesamtkostenwert (801)} = 5 + 24 = 29$$

$$\text{Gesamtkostenwert (802)} = 6 + 22 = 28$$

$$\text{Gesamtkostenwert (803)} = 8 + 16 = 24$$

Füge die Ziel-Übergangsknotenpunkte 801 bis 803 in eine Liste L2 ein, wobei die Ziel-Übergangsknotenpunkte 801 bis 803 nach ihren Gesamtkostenwerten sortiert werden:

$$L2 = \{ 803(24),\ 802(28),\ 801(29) \}$$

BEGINN SCHLEIFE

a) Entnimm den Knotenpunkt 803 mit dem niedrigsten Gesamtkostenwert aus der zweiten Liste L2 und prüfe, ob es sich bei dem Knotenpunkt 803 um einen der Start-Übergangsknotenpunkte 401 bis 404 handelt. Wenn das zutrifft, wurde eine Route von der Startposition 701 zu der Zielposition 702 gefunden, die auch als "Brücke" bezeichnet wird.
b) Wenn eine Route gefunden wurde, ermittle deren Wegekosten und vergleiche die Wegekosten aller bisher gefundenen Routen mit dem Gesamtkostenwert des Start-Übergangsknotenpunkts. Wenn die Wegekosten einer der bisher gefundenen Routen kleiner oder gleich dem Gesamtkostenwert des Start-Übergangsknotenpunkts sind, beende die Schleife (Abbruchkriterium). Andernfalls gehe weiter zu c).
c) Beschaffe diejenigen Knotenpunkte 802, 904, 905 aus der Landkartendatenbank, welche mit dem entnommenen Knotenpunkt 803 direkt verbunden sind (Nachbarknotenpunkte).
d) Verwirf diejenigen der Nachbarknotenpunkte 802, 904, 905, welche schon in einem vorigen Schritt a) verwendet wurden: 802 (war in der in a) benutzten Liste L2 enthalten).
e) Bestimme für jeden der verbleibenden Nachbarknotenpunkte 904, 905 die minimalen Wegekosten zwischen dem entnommenen Knotenpunkt 803 und dem Nachbarknotenpunkt 904, 905:

$$\text{Wegekosten (803 nach 904)} = 1$$

$$\text{Wegekosten (803 nach 905)} = 3$$

Addiere zu den Wegekosten jeweils den Kostenzweitwert des entnommenen Knotenpunkts 803 und ordne die resultierende Summe dem jeweiligen Nachbarknotenpunkt 904, 905 als Kostenzweitwert zu. Der Kostenzweitwert entspricht den minimalen Wegekosten, zu denen der Nachbarknotenpunkt 904, 905 von der Zielposition 702 aus erreichbar ist:

$$\text{Kostenzweitwert (904)} = 1 + 8 = 9$$

$$\text{Kostenzweitwert (905)} = 3 + 8 = 11$$

f) Addiere zu den Kostenzweitwerten der Nachbarknotenpunkte 904, 905 jeweils den Kostenwert, der dem jeweiligen Nachbarknotenpunkt 904, 905 in der Heuristikliste H zugeordnet ist, und ordne die resultierende Summe dem Nachbarknotenpunkt 904, 905 als Gesamtkostenwert zu. Der Gesamtkostenwert repräsentiert die minimalen Wegekosten einer Route, die vom Ausgangsbereich 202 über den Nachbarknotenpunkt 904, 905 zur Zielposition 702 führt:

$$\text{Gesamtkostenwert (904)} = 9 + 15 = 24$$

$$\text{Gesamtkostenwert (905)} = 11 + 18 = 29$$

(In Figur 9 ist neben jedem Knotenpunkt, dessen Gesamtkostenwertberechnung hier gezeigt wird, die zugehörige Berechnungsgleichung abgebildet.)
g) Sortiere diejenigen der Nachbarknotenpunkte 904, 905 mit ihren Gesamtkostenwerten in die Liste L2 ein, die dort nicht vorhanden sind oder einen Gesamtkostenwert aufweisen, welcher kleiner als der entsprechende Gesamtkostenwert der Liste L2 ist:

$$L2 = \{ \mathbf{904(24)},\ 802(28),\ \mathbf{905(29)},\ 801(29) \}$$

h) Gehe zum Beginn der Schleife.

ENDE SCHLEIFE

Daten des 2. Schleifendurchlaufs:

a) 904 ist kein Start-Übergangsknotenpunkt.
b) Weiter
c) 803, 906, 907
d) Verwirf 803
e) Wegekosten (904 nach 906) = 3
Wegekosten (904 nach 907) = 1
Kostenzweitwert (906) = 3 + 9 = 12
Kostenzweitwert (907) = 1 + 9 = 10

f) Gesamtkostenwert (906) = 12 + 18 = 30
Gesamtkostenwert (907) = 10 + 14 = 24
g) L2 = {**907(24)**, 802(28), 905(29), 801(29), **906(30)** }

Daten des 3. Schleifendurchlaufs:

a) 907 ist kein Start-Übergangsknotenpunkt.
b) Weiter
c) 904,905,906,908
d) Verwirf 904, 905, 906
e) Wegekosten (907 nach 908) = 5
Kostenzweitwert (908) = 5 + 10 = 15
f) Gesamtkostenwert (908) = 15 + 9 = 24
g) L2 = {**908(24)**, 802(28), 905(29), 801(29), 906(30) }

Daten des 4. Schleifendurchlaufs:

a) 908 ist kein Start-Übergangsknotenpunkt.
b) Weiter
c) 907,909,910,404
d) Verwirf 907
e) Wegekosten (908 nach 909) = 6
Wegekosten (908 nach 910) = 6
Wegekosten (908 nach 404) = 4
Kostenzweitwert (909) = 6 + 15 = 21
Kostenzweitwert (910) = 6 + 15 = 21
Kostenzweitwert (404) = 4 + 15 = 19
f) Gesamtkostenwert (909) = 21 + 15 = 36
Gesamtkostenwert (910) = 21 + 12 = 33
Gesamtkostenwert (404) = 19 + 5 = 24
g) L2 = { **404(24),** 802(28), 905(29), 801 (29), 906(30), **910(33), 909(36)** }

Daten des 5. Schleifendurchlaufs:

a) 404 ist ein Start-Übergangsknotenpunkt. Die damit gefundene Route 1001 verläuft von der Startposition 701 über die Knotenpunkte 404, 908, 907, 904 und 803 zu der Zielposition 702.
b) Die Wegekosten der Route 1001 betragen 19 + 6 = 25 und sind damit größer als der Gesamtkostenwert des Start-Übergangsknotenpunkts 404, welcher 24 beträgt (s.o.). Folglich ist das Abbruchkriterium nicht erfüllt, weshalb zu c) übergegangen wird.
c) 401,403,908
d) Verwirf 908
e) Wegekosten (404 nach 401) = 4
Wegekosten (404 nach 403) = 8
Kostenzweitwert (401) = 4 + 19 = 23
Kostenzweitwert (403) = 8 + 19 = 27

f) Gesamtkostenwert (401) = 23 + 4 = 27
Gesamtkostenwert (403) = 27 + 3 = 30
g) L2 = { **401(27)**, 802(28), 905(29), 801 (29), **403(30),** 906(30), 910(33), 909(36)}

Daten des 6. Schleifendurchlaufs:

a) 401 ist ein Start-Übergangsknotenpunkt. Die damit gefundene Alternativroute verläuft von der Startposition 701 über die Knotenpunkte 401, 404, 908, 907, 904 und 803 zu der Zielposition 702.
b) Die Wegekosten der Alternativroute betragen 23 + 8 = 31 und sind damit größer als der Gesamtkostenwert des Start-Übergangsknotenpunkts 401, welcher 27 beträgt (s.o.). Allerdings betragen die Wegekosten der bei dem 5. Schleifendurchlauf gefundenen Route 1001 nur 25 und sind damit kleiner als der Gesamtkostenwert des Start-Übergangsknotenpunkts 401 von 27. Folglich ist das Abbruchkriterium erfüllt, weshalb die Alternativroute verworfen und die Schleife beendet wird.

Ergebnis:

Die Route 1001, welche zu minimalen Wegekosten von der Startposition 701 zu der Zielposition 702 führt, wurde bestimmt. Wie Figur 10 zeigt, verläuft die als breite schwarze Linie dargestellte Route 1001 über die Knotenpunkte 404, 908, 907, 904 und 803. Die Wegekosten der Route 1001 betragen 25.

**Patentansprüche**

1.   Verfahren zum Bereitstellen von Zusatzdaten für eine Routenberechnung mittels einer Navigationseinrichtung, welche Landkartendaten aufweist, die Straßen und Knotenpunkte eines Straßennetzes repräsentieren, wobei die Knotenpunkte auf Straßen einer vorgegebenen Art angeordnet sind, mit folgenden Schritten:

Bestimmen der Position der Navigationseinrichtung als Ausgangsposition (201),
Festlegen eines Ausgangsbereichs (202), in dem die Ausgangsposition (201) angeordnet ist,
Bestimmen aller Austrittspunkte (301 bis 304), an denen jeweils eine der Straßen den Ausgangsbereich (202) verlässt,
Auswählen eines der Knotenpunkte für jeden der Austrittspunkte (301 bis 304) als Start-Übergangsknotenpunkt (401 bis 404), sodass der Start-Übergangsknotenpunkt (401 bis 404) am Ende einer Strecke angeordnet ist, welche den Austrittspunkt (301 bis 304) zu minimalen Wegekosten mit einem der Knotenpunkte außerhalb des Ausgangsbereichs (202) verbindet, wobei die Wegekosten einer Strecke, welche den Start-Übergangsknotenpunkt (401 bis 404) zu minimalen Wegekosten mit einem der Austrittspunkte (301 bis 304) verbindet, dem Start-Übergangsknotenpunkt (401 bis 404) als Kostenwert zugeordnet werden, und

Auswählen derjenigen Knotenpunkte als Zwischenknotenpunkte, die außerhalb des Ausgangsbereichs (202) angeordnet sind, nicht als Start-Übergangsknotenpunkt (401 bis 404) ausgewählt wurden und ein Auswahlkriterium erfüllen, wobei jedem der Zwischenknotenpunkte ein Kostenwert zugeordnet wird, der als Summe der minimalen Wegekosten, zu denen der Zwischenknotenpunkt von einem der Start-Übergangsknotenpunkte (401 bis 404) aus ausschließlich über Straßen der vorgegebenen Art erreichbar ist, und des Kostenwerts des Start-Übergangsknotenpunkts (401 bis 404) gebildet wird, und

Speichern der Start-Übergangsknotenpunkte (401 bis 404) mit den ihnen zugeordneten Kostenwerten und der Zwischenknotenpunkte mit den ihnen zugeordneten Kostenwerten als Zusatzdaten.

2. Verfahren gemäß Anspruch 1,
bei dem die Straßen der vorgegebenen Art jeweils einer vorgegebenen Straßenklasse oder einer Straßenklasse angehören, deren Rang höher als der Rang der vorgegebenen Straßenklasse ist.

3. Verfahren gemäß Anspruch 1 oder 2,
bei dem die Knotenpunkte derart angeordnet sind, dass an jedem der Knotenpunkte mehrere Straßen der vorgegebenen Art zusammentreffen.

4. Verfahren gemäß einem der vorhergehenden Ansprüche,
bei dem der Ausgangsbereich (202) eine quadratförmige Grundfläche, eine kreisförmige Grundfläche, eine rechteckförmige Grundfläche oder eine ellipsenförmige Grundfläche aufweist.

5. Verfahren gemäß einem der vorhergehenden Ansprüche,
bei dem die Größe des Ausgangsbereichs (202) von einer Geschwindigkeit abhängt, mit der die Navigationseinrichtung gegenüber dem Straßennetz bewegt wird.

6. Verfahren gemäß einem der vorhergehenden Ansprüche,
bei dem diejenigen Knotenpunkte das Auswahlkriterium erfüllen, welche vom Ausgangsbereich (202) aus über eine Strecke erreichbar sind, deren Wegekosten einen vorgegebenen Kostenwert nicht überschreiten, oder welche in einer Entfernung von dem Ausgangsbereich (202) angeordnet sind, die eine vorgegebene Entfernung nicht überschreitet.

7. Verfahren gemäß einem der vorhergehenden Ansprüche,
welches für jede von mehreren Routenoptionen (schnellste Route, kürzeste Route, ökologischste Route etc.) ausgeführt wird, die von einem Benutzer der Navigationseinrichtung auswählbar sind, wobei die Art der Wegekosten von dem Benutzer durch das Auswählen der Routenoption festgelegt wird.

8. Verfahren gemäß einem der vorhergehenden Ansprüche,
welches erneut ausgeführt wird, wenn sich die Navigationseinrichtung der Grenze des Ausgangsbereichs (202) bis auf eine vorgegebene Distanz genähert hat, die Navigationseinrichtung seit dem Verfahrensstart eine vorgegebene Streckenlänge zurückgelegt hat oder die Navigationseinrichtung seit dem Verfahrensstart eine vorgegebene Zeitdauer bewegt wurde.

9. Verfahren gemäß einem der vorhergehenden Ansprüche,
bei dem unter Verwendung der Start-Übergangsknotenpunkte (401 bis 404) und der ihnen zugeordneten Kostenwerte und der Zwischenknotenpunkte und der ihnen zugeordneten Kostenwerte eine Route (1001) berechnet wird, welche von einer Startposition (701), die innerhalb des Ausgangsbereichs (202) angeordnet ist, zu einer Zielposition (702) führt, die außerhalb des Ausgangsbereichs (202) angeordnet ist.

10. Verfahren gemäß Anspruch 9,
bei dem jedem der Start-Übergangsknotenpunkte (401 bis 404) ein Kostenzweitwert zugeordnet wird, welcher den minimalen Wegekosten entspricht, zu denen der Start-Übergangsknotenpunkt (401 bis 404) von der Startposition aus erreichbar ist.

11. Verfahren gemäß Anspruch 10,
bei dem mehrere Zwischenknotenpunkte als Ziel-Übergangsknotenpunkte (801 bis 803) ausgewählt werden, sodass jeder der Ziel-Übergangsknotenpunkte (801 bis 803) am Ende einer Strecke angeordnet ist, welche die Zielposition (702) zu minimalen Wegekosten mit einem der Zwischenknotenpunkte verbindet, wobei die Wegekosten dem Ziel-Übergangsknotenpunkt (801 bis 803) als Kostenzweitwert zugeordnet werden.

12. Verfahren gemäß Anspruch 11,
bei dem die Anzahl der Ziel-Übergangsknotenpunkte (801 bis 803) fest vorgegeben ist und zwei, drei oder vier beträgt.

**13.** Verfahren gemäß Anspruch 11 oder 12, bei dem die Route (1001) die Startposition (701) über einen der Start-Übergangsknotenpunkte (401 bis 404) und einen der Ziel-Übergangsknotenpunkte (801 bis 803) mit der Zielposition (702) verbindet, wobei der Abschnitt der Route (1001), welcher sich zwischen dem jeweiligen Start-Übergangsknotenpunkt (401 bis 404) und dem jeweiligen Ziel-Übergangsknotenpunkt (801 bis 803) erstreckt, ausschließlich über Straßen der vorgegebenen Art verläuft.

**14.** Verfahren gemäß Anspruch 13, bei dem die Route (1001) mittels A*-Algorithmus berechnet wird, welcher auf Basis der Ziel-Übergangsknotenpunkte (801 bis 803) gestartet wird, wobei die Kostenwerte als Heuristik für den A*-Algorithmus verwendet werden.

**15.** Navigationseinrichtung, welche Landkartendaten aufweist, die Straßen und Knotenpunkte eines Straßennetzes repräsentieren, wobei die Knotenpunkte auf Straßen einer vorgegebenen Art angeordnet sind, mit:

einer Positionsbestimmungseinheit, die zum Bestimmen einer Position der Navigationseinrichtung als Ausgangsposition (201) eingerichtet ist,
einer Recheneinheit, welche zum Festlegen eines Ausgangsbereichs (202), in welchem die Ausgangsposition (201) angeordnet ist, Bestimmen aller Austrittspunkte (301 bis 304), an denen jeweils eine der Straßen den Ausgangsbereich (202) verlässt, Auswählen eines der Knotenpunkte für jeden der Austrittspunkte (301 bis 304) als Start-Übergangsknotenpunkt (401 bis 404), sodass der Start-Übergangsknotenpunkt (401 bis 404) am Ende einer Strecke angeordnet ist, welche den Austrittspunkt (301 bis 304) zu minimalen Wegekosten mit einem der Knotenpunkte außerhalb des Ausgangsbereichs (202) verbindet, wobei die Wegekosten einer Strecke, welche den Start-Übergangsknotenpunkt (401 bis 404) zu minimalen Wegekosten mit einem der Austrittspunkte (301 bis 304) verbindet, dem Start-Übergangsknotenpunkt (401 bis 404) als Kostenwert zugeordnet werden, und Auswählen derjenigen Knotenpunkte als Zwischenknotenpunkte, die außerhalb des Ausgangsbereichs (202) angeordnet sind, nicht als Start-Übergangsknotenpunkt (401 bis 404) ausgewählt wurden und ein Auswahlkriterium erfüllen, wobei jedem der Zwischenknotenpunkte ein Kostenwert zugeordnet wird, der als Summe der minimalen Wegekosten, zu denen der Zwischenknotenpunkt von einem der Start-Übergangsknotenpunkte (401 bis 404) aus ausschließlich über Straßen der vorgegebenen Art erreichbar ist, und des Kostenwerts des Start-Übergangsknotenpunkts (401 bis 404) gebildet wird, eingerichtet ist, und
einer Speichereinheit, die zum Speichern der Start-Übergangsknotenpunkte (401 bis 404) mit den ihnen zugeordneten Kostenwerten und der Zwischenknotenpunkte mit den ihnen zugeordneten Kostenwerten als Zusatzdaten eingerichtet ist.

**Claims**

**1.** Method for providing additional data for a route calculation by a navigation device which comprises map data representing roads and nodal points of a road network wherein the nodal points are disposed on roads of a predetermined type, with the following steps:

determining the position of the navigation device as initial position (201),
defining an initial area (202) in which the initial position (201) is disposed,
determining all exit points (301 to 304) on each of which one of the roads exits the initial area (202),
selecting one of the nodal points for each of the exit points (301 to 304) as start transition nodal point (401 to 404) so that the start transition nodal point (401 to 404) is disposed at the end of a track which connects the exit point (301 to 304) with one of the nodal points outside the initial area (202) at minimum road costs, wherein the road costs of a track which connects the start transition nodal point (401 to 404) with one of the exit points (301 to 304) at minimum road costs are assigned to the start transition nodal point (401 to 404) as cost value,
selecting those of the nodal points as intermediate nodal points that are disposed outside the initial area (202), were not selected as start transition nodal point (401 to 404), and meet a selection criterion, wherein to each of the intermediate nodal points a cost value is assigned which is formed as sum of the minimum road costs at which the intermediate nodal point is reachable from one of the start transition nodal points (401 to 404) via roads of the predetermined type exclusively and the cost value of the start transition nodal point (401 to 404), and
storing the start transition nodal points (401 to 404) with the cost values assigned to them and the intermediate nodal points with the cost values assigned to them as additional data.

**2.** Method according to claim 1

wherein the roads of the predetermined type each belong to a predetermined road class or to a road class whose rank is higher than the rank of the predetermined road class.

3. Method according to claim 1 or claim 2
wherein the nodal points are disposed in such a way that on each nodal point several roads of the predetermined type coincide.

4. Method according to one of the preceding claims
wherein the initial area (202) comprises a square-shaped footprint, a circular footprint, a rectangular footprint, or an elliptical footprint.

5. Method according to one of the preceding claims
wherein the size of the initial area (202) depends on a speed with which the navigation device is moved with respect to the road network.

6. Method according to one of the preceding claims
wherein those nodal points meet the selection criterion which are reachable from the initial area (202) via a track whose road costs do not exceed a predetermined cost value, or which are disposed in a distance from the initial area (202) which does not exceed a predetermined distance.

7. Method according to one of the preceding claims
which is performed for each of several route options (fastest route, shortest route, most ecological route) which are selectable by an user of the navigation device wherein the kind of road costs is defined by the user by selecting the route option.

8. Method according to one of the preceding claims
which is performed again if the navigation device has approached the border of the initial area (202) up to a predetermined distance, the navigation device has travelled a predetermined track length since the start of the method, or the navigation device was moved a predetermined time period since the start of the method.

9. Method according to one of the preceding claims
wherein by using the start transition nodal points (401 to 404) and the cost values assigned to them and the intermediate nodal points and the cost values assigned to them a route (1001) is calculated which leads from a start position (701) disposed within the initial area (202) to a target position (702) disposed outside the initial area (202).

10. Method according to claim 9
wherein to each of the start transition nodal points (401 to 404) a secondary cost value is assigned which corresponds to the minimum road costs at which the start transition nodal point (401 to 404) is reachable from the start position.

11. Method according to claim 10
wherein several intermediate nodal points are selected as target transition nodal points (801 to 803) so that each of the target transition nodal points (801 to 803) is disposed at the end of a track which connects the target position (702) at minimum road costs with one of the intermediate nodal points wherein the road costs are assigned to the target transition nodal point (801 to 803) as secondary cost value.

12. Method according to claim 11
wherein the number of target transition nodal points (801 to 803) is firmly predetermined and amounts to two, three or four.

13. Method according to claim 11 or 12
wherein the route (1001) connects the start position (701) via one of the start transition nodal points (401 to 404) and one of the target transition nodal points (801 to 803) with the target position (702) wherein the section of the route (1001) which extends between the respective start transition nodal point (401 to 404) and the respective target transition nodal point (801 to 803) runs via roads of the predetermined type exclusively.

14. Method according to claim 13
wherein the route (1001) is calculated by A*-Algorithm which is started based on the target transition nodal points (801 to 803) wherein the cost values are used as heuristic for the A*-Algorithm.

15. Navigation device which comprises map data representing roads and nodal points of a road network wherein the nodal points are disposed on roads of a predetermined type, comprising:

a positioning unit which is arranged for determining a position of the navigation device as initial position (201),
a processing unit which is arranged for defining an initial area (202) in which the initial position (201) is disposed, determining all exit points (301 to 304) on each of which one of the roads exits the initial area (202), selecting one of the nodal points for each of the exit points (301 to 304) as start transition nodal point (401 to 404) so that the start transition nodal point (401 to 404) is disposed at the end of a track which connects the exit point (301 to 304) with one of the nodal points outside the initial area (202) at minimum road costs, wherein the road costs of a track which connects the start transition nodal point (401 to 404) with one of the exit points (301 to 304) at minimum road costs are assigned to the start transition nodal point (401 to 404) as cost value, and selecting those of the nodal points as intermediate nodal points that are disposed outside the initial area (202), were not selected as start transition nodal point (401 to 404), and meet a selection criterion, wherein to each of the intermediate nodal points a cost value is assigned which is formed as sum of the minimum road costs at which the intermediate nodal point is reachable from one of the start transition nodal points (401 to 404) via roads of the predetermined type exclusively and the cost value of the start transition nodal point (401 to 404), and

a storage unit which is arranged for storing the start transition nodal points (401 to 404) with the cost values assigned to them and the intermediate nodal points with the cost values assigned to them as additional data.

**Revendications**

**1.** Procédé permettant de mettre à disposition des données supplémentaires pour un calcul d'itinéraire par un dispositif de navigation qui comporte des données cartographiques représentant les routes et les noeuds d'un réseau routier, les noeuds étant situés sur des routes de type défini, **caractérisé en ce que** le procédé est constitué des étapes suivantes :

déterminer la position du dispositif de navigation comme position de départ (201),
définir une zone de départ (202) dans laquelle se trouve la position de départ (201),
déterminer tous les points de sortie (301 à 304) auxquels l'une des routes quitte la zone de départ (202),
choisir l'un des noeuds pour chacun des points de sortie (301 à 304) comme noeud transitoire de départ (401 à 404) de sorte que le noeud transitoire de départ (401 à 404) soit situé à la fin d'un itinéraire reliant le point de sortie (301 à 304) aux coûts les plus bas à l'un des noeuds situés à l'extérieur de la zone de départ (202), les coûts d'un itinéraire reliant le noeud transitoire de départ (401 à 404) aux coûts les plus bas à l'un des points de sortie (301 à 304) étant affectés au noeud transitoire de départ (401 à 404) comme valeur de coût, et
choisir comme noeuds intermédiaires les noeuds qui sont situés à l'extérieur de la zone de départ (202), qui n'ont pas été choisis comme noeud transitoire de départ (401 à 404) et qui répondent à un critère de choix, une valeur de coût étant affectée à chacun des noeuds intermédiaires et étant la somme des coûts les plus bas auxquels le noeud intermédiaire peut être rejoint depuis l'un des noeuds transitoires de départ (401 à 404) exclusivement par des routes du type défini, et de la valeur de coût du noeud transitoire de départ (401 à 404), et
enregistrer les noeuds transitoires de départ (401 à 404) et les valeurs de coût qui leur sont affectées, ainsi que les noeuds intermédiaires et les valeurs de coût qui leur sont affectées, en tant que données supplémentaires.

**2.** Procédé selon la revendication 1, **caractérisé en ce que** les routes du type défini font chacune partie d'une catégorie de routes définie ou d'une catégorie de routes ayant un rang supérieur à celui de la catégorie de routes définie.

**3.** Procédé selon les revendications 1 ou 2, **caractérisé en ce que** les noeuds sont disposés de telle manière qu'à chacun des noeuds, plusieurs routes du type défini convergent.

**4.** Procédé selon l'une des revendications précédentes, **caractérisé en ce que** la zone de départ (202) a une surface de base carrée, une surface de base circulaire, une surface de base rectangulaire ou une surface de base en forme d'ellipse.

**5.** Procédé selon l'une des revendications précédentes, **caractérisé en ce que** la taille de la zone de départ (202) dépend d'une vitesse à laquelle le dispositif de navigation se déplace par rapport au réseau routier.

**6.** Procédé selon l'une des revendications précédentes, **caractérisé en ce que** les noeuds qui répondent au critère de choix sont ceux qui peuvent être rejoints depuis la zone de départ (202) par un itinéraire dont les coûts ne dépassent pas une valeur de coût définie, ou qui sont situés à une distance de la zone de départ (202), qui ne dépasse pas une distance définie.

**7.** Procédé selon l'une des revendications précédentes, **caractérisé en ce qu'**il est exécuté pour chacune des options d'itinéraire multiples (itinéraire le plus rapide, itinéraire le plus court, itinéraire le plus écologique, etc.) qui peuvent être choisies par l'utilisateur du dispositif de navigation, le type de coûts étant défini par l'option d'itinéraire choisie par l'utilisateur.

**8.** Procédé selon l'une des revendications précédentes, **caractérisé en ce qu'**il est à nouveau exécuté lorsque le dispositif de navigation s'approche de la limite de la zone de départ (202) à une distance définie, que le dispositif de navigation a parcouru une distance d'itinéraire définie depuis le début du procédé ou que le dispositif de navigation s'est déplacé pendant une durée définie depuis le début du procédé.

9. Procédé selon l'une des revendications précédentes,
**caractérisé en ce qu'**il utilise les noeuds transitoires de départ (401 à 404) et les valeurs de coût qui leur sont affectées, ainsi que les noeuds intermédiaires et les valeurs de coût qui leur sont affectées, pour calculer un itinéraire (1001) qui relie une position de départ (701) située à l'intérieur de la zone de départ (202) à une position de destination (702) située à l'extérieur de la zone de départ (202).

10. Procédé selon la revendication 9,
**caractérisé en ce qu'**une deuxième valeur de coût, qui correspond aux coûts les plus bas auxquels le noeud transitoire de départ (401 à 404) peut être rejoint depuis la position de départ, est affectée à chacun des noeuds transitoires de départ (401 à 404).

11. Procédé selon la revendication 10,
**caractérisé en ce que** plusieurs noeuds intermédiaires sont choisis comme noeuds transitoires de destination (801 à 803), de sorte que chacun des noeuds transitoires de destination (801 à 803) se situe à la fin d'un itinéraire qui relie la position de destination (702) à l'un des noeuds intermédiaires aux coûts les plus bas, les coûts étant affectés comme deuxième valeur de coût au noeud transitoire de destination (801 à 803).

12. Procédé selon la revendication 11,
**caractérisé en ce que** le nombre de noeuds transitoires de destination (801 à 803) est défini et est de deux, trois ou quatre.

13. Procédé selon les revendications 11 ou 12,
**caractérisé en ce que** l'itinéraire (1001) relie la position de départ (701) à la position de destination (702) par l'un des noeuds transitoires de départ (401 à 404) et l'un des noeuds transitoires de destination (801 à 803), la partie de l'itinéraire (1001) comprise entre le noeud transitoire respectif de départ (401 à 404) et le noeud transitoire respectif de destination (801 à 803) étant exclusivement constituée de routes du type défini.

14. Procédé selon la revendication 13,
**caractérisé en ce que** l'itinéraire (1001) est calculé avec un algorithme A* lancé sur la base des noeuds transitoires de destination (801 à 803), les valeurs de coût étant utilisées comme heuristique pour l'algorithme A*.

15. Dispositif de navigation comportant des données cartographiques qui représentent les routes et les noeuds d'un réseau routier, les noeuds étant disposés sur des routes d'un type défini, avec :

une unité de définition de position configurée pour déterminer la position du dispositif de navigation comme position de départ (201),
une unité de calcul configurée pour définir une zone de départ (202) dans laquelle se trouve la position de départ (201), pour déterminer tous les points de sortie (301 à 304) auxquels l'une des routes quitte la zone de départ (202), pour choisir l'un des noeuds pour chacun des points de sortie (301 à 304) comme noeud transitoire de départ (401 à 404) de sorte que le noeud transitoire de départ (401 à 404) soit situé à la fin d'un itinéraire reliant le point de sortie (301 à 304) aux coûts les plus bas à l'un des noeuds situés à l'extérieur de la zone de départ (202), les coûts d'un itinéraire reliant le noeud transitoire de départ (401 à 404) aux coûts les plus bas à l'un des points de sortie (301 à 304) étant affectés au noeud transitoire de départ (401 à 404) comme valeur de coût, et pour choisir comme noeuds intermédiaires les noeuds qui sont situés à l'extérieur de la zone de départ (202), qui n'ont pas été choisis comme noeud transitoire de départ (401 à 404) et qui répondent à un critère de choix, une valeur de coût étant affectée à chacun des noeuds intermédiaires et étant la somme des coûts les plus bas auxquels le noeud intermédiaire peut être rejoint depuis l'un des noeuds transitoires de départ (401 à 404) exclusivement par des routes du type défini, et de la valeur de coût du noeud transitoire de départ (401 à 404), et
une unité mémoire configurée pour enregistrer les noeuds transitoires de départ (401 à 404) et les valeurs de coût qui leur sont affectées, ainsi que les noeuds intermédiaires et les valeurs de coût qui leur sont affectées, en tant que données supplémentaires.

FIG 1

FIG 2

FIG 3

FIG 4

FIG 5

FIG 6

FIG 7

FIG 8

FIG 9

FIG 10

**IN DER BESCHREIBUNG AUFGEFÜHRTE DOKUMENTE**

**In der Beschreibung aufgeführte Patentdokumente**

- EP 1850091 A2
- EP 2075537 A2
- EP 790486 A2